# EUROPEAN PATENT APPLICATION

(11) **EP 4 667 081 A1**
(43) Date of publication of application: **24.12.2025**
(21) Application number: 23922865.3
(22) Date of filing: 06.11.2023
(51) Int. Cl.: B01D 53/04, B01J 20/16, B01J 20/18, B01J 20/20, B01J 20/22, B01J 20/26, B01J 20/34

(54) **GAS ADSORPTION/DESORPTION UNIT, GAS ADSORPTION/DESORPTION DEVICE AND METHOD FOR PRODUCING MAGNETIC BODY**

(30) Priority: 17.02.2023 JP 2023023656
(71) Applicant: NGK Insulators, Ltd., Nagoya-shi, Aichi 467-8530 (JP)
(72) Inventor: ICHIKAWA,Shuichi, Nagoya-shi, Aichi 467-8530 (JP); ISHIHARA,Takuya, Nagoya-shi, Aichi 467-8530 (JP); MIYAIRI,Yukio, Nagoya-shi, Aichi 467-8530 (JP)
(74) Representative: MERH-IP Matias Erny Reichl Hoffmann Patentanwälte PartG mbB
(86) International application number: PCT/JP2023/039922
(87) International publication number: WO 2024/171532

(57) **Abstract**

A gas adsorption/desorption unit 2 according to this invention includes: one or more honeycomb structures 20 including a honeycomb structure portion 24 having an outer peripheral wall 240 and partition walls 241 provided on an inner side of the outer peripheral wall 240, the partition walls 241 defining a plurality of cells 241a each extending from one end face to other end face of the honeycomb structure portion 24 to form a flow path; and at least one induction heating coil 21 provided around the periphery of each of the one or more honeycomb structures 20, wherein at least one of the one or more honeycomb structures 20 comprises a magnetic material and a gas adsorbent.

## Description

### FIELD OF THE INVENTION

This invention relates to a gas adsorption/desorption unit and a gas adsorption/desorption device for adsorbing and desorbing gases, as well as a method for producing a magnetic material.

### BACKGROUND OF THE INVENTION

For example, a direct air recovery (DAC) method, which directly recovers gases such as carbon dioxide (CO₂) from the air, is known. In DAC, gases are adsorbed on a gas adsorbent that selectively adsorbs gases having specific components, and the gases are desorbed from the gas adsorbent for recovery. Conventional configurations for adsorption and desorption of such gases can be found in the following Patent Literatures 1 and 2.

Patent Literature 1 describes a device for separating and removing CO₂ from a gas containing CO₂ by using a CO₂ adsorbent. In this device, the CO₂ adsorbent is filled in an adsorbent container while being mixed with a magnetic material that generates heat through induction heating, and CO₂ is adsorbed into the CO₂ adsorbent, and the CO₂ is then desorbed from the CO₂ adsorbent through induction heating.

Patent Literature 2 describes a temperature swing adsorption method for separating fluid mixtures containing at least a first fluid component and a second fluid component. The fluid mixture is introduced into an adsorption separation system provided with a parallel path adsorbent contacting device. The parallel path adsorbent contacting device includes: a plurality of parallel fluid flow paths oriented in a first axial direction between its inlet and outlet ends; cell walls located between the fluid flow paths including at least one adsorbent material; and a plurality of axially oriented and axially continuous thermally conductive filaments that are in direct contact with at least one adsorbent material. Heat derived from the adsorption heat of the fluid components on the adsorbent material and heat in desorbing the fluid components adsorbed on the adsorbent material are transferred by the heat conductive filaments.

### CITATION LIST

### Patent Literatures

[Patent Literature 1] Japanese Patent No. 6399208 B
[Patent Literature 2] Japanese Patent No. 5904420 B

### SUMMARY OF THE INVENTION

For efficiently desorbing the gas from the gas adsorbent, the entire gas adsorbent is required to be uniformly heated at a predetermined temperature (e.g., a temperature required to desorb CO₂ from amine is about 100°C).

In Patent Literature 1, the CO₂ adsorbent is filled in an adsorbent container while being mixed with a magnetic material, but the present relationship between the magnetic material and the CO₂ adsorbent in the adsorbent container is not necessarily constant, making it difficult to achieve uniform heating.

By supporting the adsorbent on a certain support (parallel path adsorbent contactor) as in Patent Literature, the accuracy of distribution and heating of the adsorbent material can be improved. However, in order to uniformly heat the adsorbent material using thermally conductive filaments as in Patent Literature 2, the thermally conductive filaments must be densely arranged in the support, and it is not easy to introduce a means for bringing electrical conduction to these thermally conductive filaments.

This invention has been made to solve the problems as described above, and one of its objects is to provide a gas adsorption/desorption unit and a gas adsorption/desorption device that can more surely and uniformly heat a gas adsorbent and efficiently adsorb/desorb a gas to/from the gas adsorbent. Another object of this invention is to provide a method for producing a magnetic material that can produce a magnetic material suitable for use in such a gas adsorption/desorption unit.

Aspect 1. In an embodiment, this invention relates to a gas adsorption/desorption unit comprising: one or more honeycomb structures including a honeycomb structure portion having an outer peripheral wall and partition walls provided on an inner side of the outer peripheral wall, the partition walls defining a plurality of cells each extending from one end face to other end face of the honeycomb structure portion to form a flow path; and at least one induction heating coil provided around the periphery of each of the one or more honeycomb structures, wherein at least one of the one or more honeycomb structures comprises a magnetic material and a gas adsorbent.

Aspect 2. This invention may relate to the gas adsorption/desorption unit according to Aspect 1, wherein the magnetic material is present in at least a part of the honeycomb structure in radial and axial directions.

Aspect 3. This invention may relate to the gas adsorption/desorption unit according to Aspect 2, wherein the magnetic material is present inside the outer peripheral wall, inside the partition walls, inside the cells, and/or on the outer peripheral wall.

Aspect 4. This invention may relate to the gas adsorption/desorption unit according to Aspect 3, wherein the magnetic material present inside the cells is filled in the cells or coated on surfaces of the partition walls.

Aspect 5. This invention may relate to the gas adsorption/desorption unit according to any one of Aspects 1 to 4, further comprising a magnetic shield provided around the outer periphery of the induction heating coil.

Aspect 6. This invention may relate to the gas adsorption/desorption unit according to any one of Aspects 1 to 5, wherein the honeycomb structure portion comprises at least one selected from the group consisting of cordierite, silicon carbide, silicon, silicic acid and alumina.

Aspect 7. This invention may relate to the gas adsorption/desorption unit according to any one of Aspects 1 to 6, wherein a glass or crystal body containing Al and/or Si is disposed between the honeycomb structure and the induction heating coil.

Aspect 8. this invention may relate to the gas adsorption/desorption unit according to Aspect 5 or Aspect 6 or 7 depending from Aspect 5, wherein a glass or crystal body containing Al and/or Si is disposed between the induction heating coil and the magnetic shield.

Aspect 9. This invention may relate to the gas adsorption/desorption unit according to any one of Aspects 1 to 8, wherein the gas adsorbent comprises at least one selected from the group consisting of nitrogen-containing compounds, porous organic cages, polystyrene, metal-organic frameworks, metal oxides, graphene, activated carbon, nitrogen doped carbon, alkali compounds, carbonates, bicarbonates, zeolite, amorphous alumina silicates, ionic liquids, or combinations thereof.

Aspect 10. This invention may relate to the gas adsorption/desorption unit according to any one of Aspects 1 to 9, wherein the magnetic material comprises at least one selected from the group consisting of Fe, Cr, Ni, Mn, Zn, Co, Cu, and Si.

Aspect 11. This invention may relate to the gas adsorption/desorption unit according to any one of Aspects 1 to 10, wherein the magnetic material has a Curie point of 300°C or lower.

Aspect 12. This invention may relate to the gas adsorption/desorption unit according to Aspect 11, wherein the magnetic material comprises three components: MnO, ZnO, and Fe₂O₃, and molar concentrations of MnO and ZnO in the total of the three components satisfy a relational expression: 65 ≤ MnO (mol%) + 2 × ZnO (mol%) ≤ 80.

Aspect 13. This invention may relate to the gas adsorption/desorption unit according to any one of Aspects 1 to 12, wherein the magnetic material has an initial magnetic permeability of 1000 (H/m) or more.

Aspect 14. This invention may relate to the gas adsorption/desorption unit according to any one of Aspects 1 to 13, wherein the magnetic material has an electrical resistivity of 10 Ωm or less.

Aspect 15. This invention may relate to the gas adsorption/desorption unit according to any one of Aspects 1 to 14, wherein the gas adsorbent is present inside the outer peripheral wall, inside the partition walls and/or inside the cells.

Aspect 16. This invention may relate to the gas adsorption/desorption unit according to Aspect 15, wherein the gas adsorbent present inside the cells is filled in the cells or coated on surfaces of the partition walls.

Aspect 17. This invention may relate to the gas adsorption/desorption unit according to Aspect 15, wherein the gas adsorbent is present inside the cells, the cells comprise: first cells plugged at the other end face; second cells plugged at the one end face; and third cells provided between the first cells and the second cells and filled with the gas adsorbent, and the gas adsorption/desorption unit is configured so that the gas flowing into the first cells from the one end face passes through the partition walls and the third cells to reach the second cells, and flows out through the second cells from the other end face.

Aspect 18. In an embodiment, this invention relates to a gas adsorption/desorption device comprising: the gas adsorption/desorption unit according to any one of Aspects 1 to 17; and a power source circuit connected to the induction heating coil, wherein the gas adsorption/desorption device is configured to enable induction heating of the honeycomb structure by a magnetic flux from the induction heating coil when desorbing a gas from the gas adsorbent.

Aspect 19. This invention may relate to the gas adsorption/desorption device according to Aspect 18, wherein the gas adsorption/desorption device comprises a gas adsorbent, and further comprises a gas adsorption member provided between the honeycomb structure and the induction heating coil, and/or between the honeycomb structures.

Aspect 20: This invention may relate to the gas adsorption/desorption device according to Aspect 18 or 19, wherein a frequency of alternating current from the power source circuit to the induction heating coil is 10 to 150 kHz.

Aspect 21: In an embodiment, this invention relates to a method for producing a magnetic material for use in the gas adsorption/desorption unit according to any one of Aspects 12 to 14, the method comprising a heat treatment step of heating a magnetic element while exposing it to an atmosphere having an oxygen concentration of 2 to 12 vol %.

According to an embodiment of the gas adsorption/desorption unit and the gas adsorption/desorption device, at least one of the one or more honeycomb structures contains the magnetic material and the gas adsorbent, so that the gas adsorbent can be more reliably and uniformly heated, and gas can be efficiently desorbed from the gas adsorbent. Furthermore, in the method for producing the magnetic material according to this invention, the magnetic element is heated in the heat treatment step while exposing it to an atmosphere having an oxygen concentration of 2 to 12 vol %, so that a magnetic material suitable for use in such a gas adsorption/desorption unit and gas adsorption/desorption device can be produced.

### BRIEF DESCRIPTION OF THE DRAWINGS

FIG. 1 is an explanatory view illustrating a gas adsorption/desorption device according to an embodiment of this invention;
FIG. 2 is a perspective view illustrating the gas adsorption/desorption unit in FIG. 1;
FIG. 3 is a circuit diagram illustrating a power source circuit in FIG. 1;
FIG. 4 is a front view illustrating the honeycomb structure in FIG. 2 and its periphery;
FIG. 5 is an explanatory view illustrating a variation of the gas adsorption/desorption device in FIG. 1;
FIG. 6 is an explanatory view illustrating a first example of a present mode of a magnetic material and a gas adsorbent in the honeycomb structure in FIG. 2;
FIG. 7 is an explanatory view illustrating a second example of a present mode of a magnetic material and a gas adsorbent in the honeycomb structure in FIG. 2;
FIG. 8 is an explanatory view illustrating a third example of a present mode of a magnetic material and a gas adsorbent in the honeycomb structure in FIG. 2;
FIG. 9 is an explanatory view illustrating a fourth example of a present mode of a magnetic material and a gas adsorbent in the honeycomb structure in FIG. 2;
FIG. 10 is a front view illustrating an example of a honeycomb structure for implementing the present mode of the magnetic material and the gas adsorbent in FIG. 9;
FIG. 11 is a front view illustrating another example of a honeycomb structure for implementing the present mode of the magnetic material and the gas adsorbent in FIG. 9.
FIG. 12 is an explanatory view illustrating a relationship between a component ratio of a three-component system and a Curie point for a magnetic material containing MnO, ZnO, and Fe₂O₃; and
FIG. 13 is a graph illustrating a relationship between an oxygen concentration of an atmosphere to which a magnetic material is exposed in a heat treatment step and a magnetic permeability of the magnetic material.

### DETAILED DESCRIPTION OF THE INVENTION

Hereinafter, embodiments of the invention will be specifically described with reference to the drawings. The invention is not limited to each embodiment, and components can be modified and embodied without departing from the spirit of the invention. Further, various inventions can be formed by appropriately combining a plurality of components disclosed in each embodiment. For example, some components may be removed from all of the components shown in the embodiments. Furthermore, the components of different embodiments may be optionally combined.

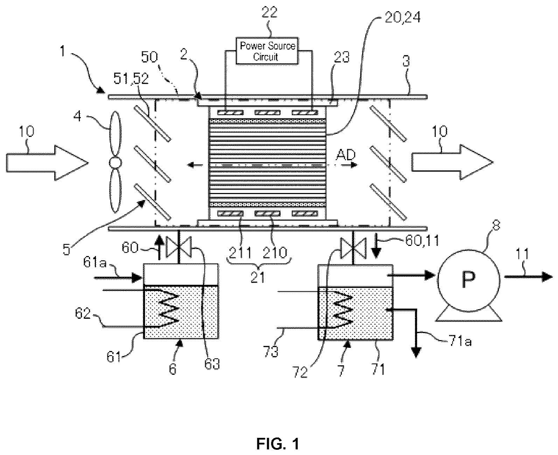

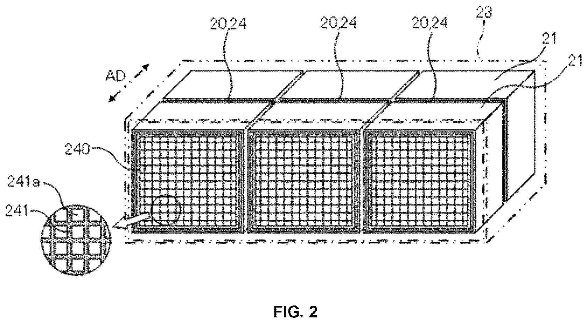

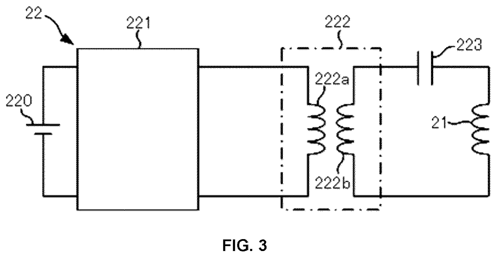

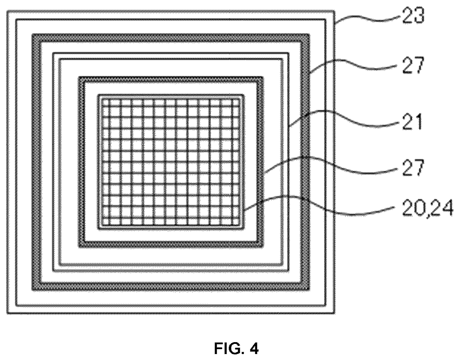

FIG. 1 is an explanatory view illustrating a gas adsorption/desorption device 1 according to an embodiment of this invention, FIG. 2 is a perspective view illustrating a gas adsorption/desorption unit 2 in FIG. 1, FIG. 3 is a circuit diagram illustrating a power source circuit 22 in FIG. 1, and FIG. 4 is a front view illustrating a honeycomb structure 20 in FIG. 2 and its periphery. The gas adsorption/desorption device 1 and the gas adsorption/desorption unit 2 illustrated in FIGS. 1 and 2 are for adsorbing and desorbing a gas 11, which is part of components, from a mixed gas 10 containing multiple components. Typically, the mixed gas 10 is atmospheric air and the gas 11 to be adsorbed and desorbed is a carbon dioxide gas. The gas adsorption/desorption device 1 and the gas adsorption/desorption unit 2 according to this embodiment can be used for recovering the carbon dioxide (CO₂) gas from the atmospheric air.

As illustrated in FIG. 1, the gas adsorption/desorption device 1 includes a gas adsorption/desorption unit 2, a housing 3, a fan 4, a damper 5, a water vapor feeder 6, a gas separator 7, and a vacuum pump 8.

The gas adsorption/desorption unit 2 is for adsorbing and desorbing the gas 11 as a part of the components from the mixed gas 10 as described above. The gas adsorption/desorption unit 2 includes: one or more honeycomb structures 20; an induction heating coil 21; a power supply circuit 22; and a magnetic shield 23.

Each honeycomb structure 20 has a honeycomb structure portion 24. As illustrated in FIG. 2, the honeycomb structure portion 24 has an outer peripheral wall 240 and partition walls 241 provided on an inner side of the outer peripheral wall 240, the partition walls 251 defining a plurality of cells 241a, each of the cells 241a extending from one end face to other end face of the honeycomb structure portion 24 to form a flow path. The outer shape of the honeycomb structure 24 may be pillar-shaped. The pillar shape is understandable as a three-dimensional shape having a given thickness in an axial direction AD. The axial direction AD can be the extending direction of the cells 241a. A ratio of the axial length of the honeycomb structure portion 24 to the diameter or width of the end face of the honeycomb structure 24 (aspect ratio) is arbitrary. The pillar shape may include a shape (flat shape) in which the axial length of the honeycomb structure portion 24 is shorter than the diameter or width of the end face. The outer shape of the honeycomb structure portion 24 can include, but not limited to, a pillar shape with quadrangular end faces (quadrangular pillar shape), a pillar shape with circular or oval end faces, a pillar shape with polygonal end faces (triangular, pentagonal, hexagonal, heptagonal, octagonal, etc.) with less or more corners on the end faces, as shown in FIG. 2.

The material of the honeycomb structure portion 24 (the outer peripheral wall 240 and the partition walls 241) is not particularly limited, but it is typically made of a ceramic material. The honeycomb structure portion 24 preferably includes at least one selected from the group consisting of cordierite, silicon carbide, silicon, silica, and alumina. Specific examples of the honeycomb structure include cordierite, silicon carbide, aluminum titanate, silicon nitride, mullite, alumina, silica, silicon-silicon carbide-based composite materials, silicon carbide-cordierite-based composite materials, and the like. More preferably, it is formed of cordierite, alumina, silica, silicon carbide, and silicon-silicon carbide-based composite material. As used herein, the term "silicon carbide-based" or "cordierite-based" means that the outer peripheral wall 240 and the partition walls 241 contain silicon carbide or cordierite in an amount of 50% by mass or more of the whole of the outer peripheral wall 240 and the partition walls 241.

The shape of each cell 241a is not particularly limited, but it may be polygonal such as triangular, quadrangular, pentagonal, hexagonal, heptagonal, and octagonal, circular, or oval in the cross section of the honeycomb structure 20 orthogonal to the central axial direction. Preferably, it may be polygonal.

The thickness of the partition walls 241 may preferably be 0.05 to 0.50 mm, and more preferably 0.07 to 0.38 mm in terms of ease of production. For example, the thickness of the partition walls 251 of 0.05 mm or more improves the strength of the honeycomb structure 20, and the thickness of 0.50 mm or less reduces the pressure loss. The thickness of the partition walls 241 is an average value measured by the method of microscopic observation of the cross-section in the central axial direction.

The porosity of the partition walls 241 is preferably 20 to 70%. The porosity of the partition walls 241 is preferably 20% or more in terms of ease of production, and when it is 70% or less, the strength of the honeycomb structure 20 can be maintained.

The partition walls 241 preferably has an average pore size of 2 to 30 µm, and more preferably 5 to 25 µm. The average pore diameter of the partition walls 241 of 2 µm or more may lead to easy production, and the average pore diameter of 30 µm or less can ensure the strength of the honeycomb structure 20. As used herein, the terms "average pore size" and "porosity" refer to the average pore size and porosity measured by mercury intrusion technique.

The cells 241a preferably has a density in the range of 5 to 150 cells/cm², more preferably in the range of 16 to 100 cells/cm², and even more preferably in the range of 31 to 100 cells/cm², although not particularly limited thereto.

Such a honeycomb structure portion 24 is produced by forming a green body containing ceramic raw materials into a honeycomb shape having partition walls 241 that extend from one end face to the other end face and define a plurality of cells 241a as fluid flow paths to form a honeycomb formed body, and then drying and firing the honeycomb formed body. The outer peripheral wall 240 may be an outer peripheral wall 240 extruded integrally with the honeycomb formed body, or after the honeycomb formed body is formed or fired, the outer periphery of the honeycomb formed body or honeycomb sintered body is ground to a predetermined shape, and a coating material is applied to the honeycomb formed body or honeycomb sintered body whose outer periphery has been ground to form an outer peripheral coating, which may be used as the outer peripheral wall 240 (in this case, only the outer peripheral coating becomes the peripheral wall 240). Also, without being ground the outer peripheral wall 240 extruded integrally with the honeycomb formed body, an outer peripheral coating may be formed on the outer peripheral wall 240 (the outer peripheral wall 250 has a two layer structure of the outer peripheral wall such as the honeycomb sintered body and the outer peripheral coating).

The honeycomb structure 20 is not limited to the integral honeycomb structure 20 in which the partition walls 241 are integrally formed, and it may be, for example, a honeycomb structure 20 (joined honeycomb structure) having a structure in which a plurality of pillar shaped honeycomb segments, each having a plurality of cells 241a as fluid flow paths defined by ceramic partition walls 241 are combined together via joining material layers.

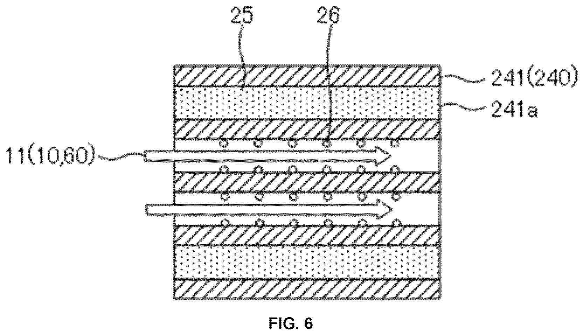

The honeycomb structure 20 includes a magnetic material 25 and a gas adsorbent 26. The magnetic material 25 and the gas adsorbent 26 are illustrated in FIG. 6 and the like described later.

Here, for efficiently desorbing the gas 11 from the gas adsorbent 26, the entire gas adsorbent 26 is required to be uniformly heated at a predetermined temperature (e.g., a temperature required to desorb CO₂ from amine is about 100°C). When the magnetic material 25 and the gas adsorbent 26 are filled in a large container while being mixed as in Patent Literature 1 described above, the present relationship between the magnetic material 25 and the gas adsorbent 26 within the container is not necessarily constant (in other words, it is difficult to control the distribution of the gas adsorbent 26), resulting in difficulty to uniformly heat the gas adsorbent 26. However, by incorporating the magnetic material 25 and the gas adsorbent 26 into a structure having a predetermined shape, namely the honeycomb structure 20, the present relationship between the magnetic material 25 and the gas adsorbent 26 can be easily made constant (in other words, the distribution of the magnetic material 25 and the gas adsorbent 26 can be more reliably controlled), the gas adsorbent 26 can be more reliably and uniformly heated, and the gas 11 can be efficiently desorbed from the gas adsorbent 26. The magnetic material 25 as a heating source can be provided evenly in the vicinity of the gas adsorbent 26. Also, in order to uniformly heat the gas adsorbent 26 using thermally conductive filaments as in Patent Literature 2 described above, the thermally conductive filaments must be densely arranged in first honeycomb structure 20, and it is not easy to introduce a means for bringing electrical conduction through these thermally conductive filaments, but by including the magnetic material 25 and the gas adsorbent 26 in the honeycomb structure 20, which is a structure having a predetermined shape, the gas adsorbent 26 can be more reliably and uniformly heated by induction heating, and the gas 11 can be efficiently desorbed from the gas adsorbent 26.

Further, by including the magnetic material 25 and the gas adsorbent 26 in the honeycomb structure 20, the effective area for adsorption/desorption per volume can be increased. Furthermore, the flow paths (cells 241a) for a mixed gas 10 and a gas 11 that is a component of the mixed gas 10 can be ensured in the honeycomb structure 20, so that the gas 11 can be efficiently adsorbed and desorbed, and the recovery efficiency of the gas 11 can be improved.

As will be described later with reference to the drawings, the magnetic material 25 may be present in at least a part of the honeycomb structure 20 in the radial direction and the axial direction AD. The magnetic material 25 may also be present inside the outer peripheral wall 240, inside the partition walls 241, inside the cells 241a, and/or on the outer peripheral wall 240. The magnetic material 25 present inside the cells 241a may be filled in the cells 241a or coated on the surfaces of the partition walls 241.

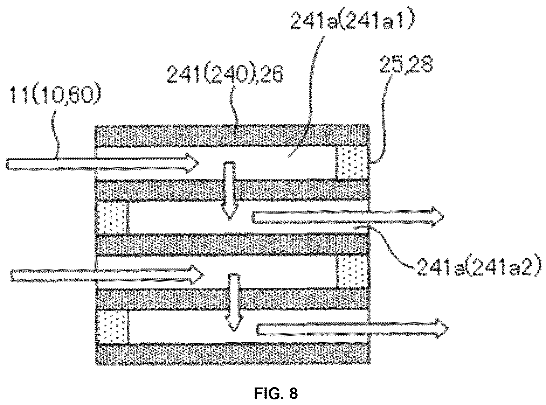

The magnetic material 25 filled in the cells 241a may form plugged portions 28 (see FIG. 8, etc.) that plug the ends or the entirety of the cells 241a. The magnetic material 25 coated on the surfaces of the partition walls 241 can form a coating layer together with an adhesive material in which the magnetic material 25 is dispersed. The adhesive material that can be used herein includes glass which contains silicic acid, boric acid or borosilicate, crystallized glass, ceramics, or glass, crystallized glass, ceramics, or the like, which contains other oxides.

When the magnetic material 25 forms the plugged portions 28, the magnetic material 25 may have a pillar-shaped outer shape that matches the shape of each cell 241a. The magnetic material 25 may have such an external shape before being filled in the cells 241a, or it may have such an external shape by being filled in the cells 241a. In other words, the magnetic material 25 may form a shaped material having a predetermined shape or an irregularly shaped material in the form of a paste.

The shaped and irregularly shaped materials may be made of a composite composition of the magnetic material 25 and a binding material or adhesive material. The binding material includes, for example, materials based on a metal or glass. The adhesive material includes materials based on silica or alumina. In addition to the binding material or adhesive material, it may further contain organic or inorganic materials. The magnetic material 25 may be filled over the entire honeycomb structure 20 from one end face to the other end face. Moreover, the magnetic material 25 may be filled from one end face of the honeycomb structure 20 to the middle of the cells 241a.

The magnetic material 25 can contain at least one selected from the group consisting of Fe, Cr, Ni, Mn, Zn, Co, Cu and Si. Examples of the magnetic material 25 includes metals such as: balance Co-20 mass% Fe, balance Co-25 mass% Ni-4 mass% Fe, balance Fe-15 to 35 mass% Co, balance Fe-17 mass% Co-2 mass% Cr-1 mass% Mo, balance Fe-49 mass% Co-2 mass% V, balance Fe-18 mass% Co-10 mass% Cr-2 mass% Mo-1 mass% Al, balance Fe-27 mass% Co-1 mass% Nb, balance Fe-20 mass% Co-1 mass% Cr-2 mass% V, balance Fe -35 mass% Co-1 mass% Cr, pure cobalt, pure iron, electromagnetic soft iron, balance Fe-0.1 to 0.5 mass% Mn, balance Fe-3 mass% Si, balance Fe- 6.5 mass% Si, balance Fe-18 mass% Cr, balance Fe-16 mass% Cr-8 mass% Al, balance Ni-13 mass% Fe-5.3 mass% Mo, balance Fe-45 mass% Ni, balance Fe-10 mass% Si-5 mass% Al, balance Fe-36 mass% Ni, balance Fe-45 mass% Ni, balance Fe-35 mass% Cr, balance Fe-13 mass% Cr-2 mass% Si, balance Fe-20 mass% Cr-2 mass% Si-2 mass% Mo, balance Fe-20 mass% Co-1 mass% V, balance Fe-13 mass% Cr-2 mass% Si, balance Fe-17 mass% Co-2 mass% Cr-1 mass% Mo. Furthermore, examples of the magnetic material 25 include oxides such as Mn-Zn ferrite, Cu-Zn ferrite, Ni-Zn ferrite, and Cu-Zn-Mg ferrite. These magnetic materials 25 have different Curie points depending on the materials, and are appropriately selected depending on the heating temperature required for desorption of the gas adsorbent 26.

Also, as will be described later with reference to the drawings, the gas adsorbent 26 may be present inside the outer peripheral wall 240, inside the partition walls 241, and/or inside the cells 241a. The gas adsorbent 26 present inside the cells 241a may be filled in the cells 241a or coated on the surfaces of partition walls 241.

The gas adsorbent 26 can contain at least one selected from the group consisting of nitrogen-containing compounds such as polyamines, polyethyleneimines, imidazolium salts, amine epoxy compounds, pyrrolidine, ethylenediamine, diethylenediamine, propylenediamine, poly-propyleneguanidine, and metaxylylenediamine; porous organic cages (POCs); polystyrene; metal-organic frameworks; metal oxides; graphene; activated carbon; nitrogen doped carbon; alkali compounds; carbonates; hydrogencarbonates; zeolites; amorphous alumina silicates; ionic liquids; and combinations thereof.

The induction heating coil 21 is a conductor 210 wound around a predetermined axis. The induction heating coil 21 is disposed on the outer periphery of the honeycomb structure 20. The axis of the induction heating coil 21 can be parallel to the axial direction AD of the honeycomb structure 20. The axis may be coaxial with the central axis of the honeycomb structure 20. Although FIG. 1 illustrates the conductor 210 in the form of a strip having a rectangular cross section, the conductor 210 may have any shape and may have other shapes, such as a circular or tubular shape. The conductor 210 may be molded with an insulating material 211. The insulating material 211 may be made of alumina, mullite, and/or heat-resistant resin. FIG. 1 illustrates an embodiment in which the conductor 210 molded with the insulating material 211 is fitted to the outer surface of an outer peripheral wall 240 of the honeycomb structure 20.

A power source circuit 22 is connected to the induction heating coil 21. As illustrated in FIG. 3, the power source circuit 22 can include a DC power source 220, an inverter 221, a transformer 222, and a resonance capacitor 223. DC power from the DC power source 220 is converted into AC power by the inverter 221. The transformer 222 is used when it is desired to amplify the current flowing through the induction heating coil 21, and has a primary coil 222a connected to the inverter 221, and a secondary coil 222b connected to the resonant capacitor 223 and the induction heating coil 21. The turns ratio of the primary coil 222a and the secondary coil 222b is N:1. N is a number greater than 1, the transformer 222 can amplify the current of AC power. The capacitance of the resonance capacitor 223 is set so as to adjust the resonance frequency of the power source circuit 22. The induction heating coil 21 can be connected in series to the resonance capacitor 223 and can be connected together with the resonance capacitor 223 to both ends of the secondary coil 222b.

When an alternating current is supplied from the power source circuit 22 to the induction heating coil 21, a magnetic flux is generated in the vicinity of the induction heating coil 21. The honeycomb structure 20 and the magnetic material 25 can be subjected to induction heating by the magnetic flux from the induction heating coil 21. The frequency of the alternating current from the power source circuit 22 to the induction heating coil 21 is preferably 10 to 150 kHz. The frequency of 10 kHz or higher provides sufficient heating characteristics. The frequency of 150 kHz or less can avoid complicating of a device design when the device becomes larger and the power input increases. The frequency of the alternating current is preferably 30 to 80 kHz.

By selecting the Curie point of the magnetic material 25, the heating temperature of the magnetic material 25 by induction heating can be adjusted. The gas adsorbent 26 is heated for the purpose of desorbing the gas 11, but if the temperature is excessively increased, it may cause problems such as a decrease in the specific surface area of the gas adsorbent 26. By selecting the magnetic material 25 with a lower Curie point, such problems can be suppressed. The magnetic material 25 may have a Curie point of 400°C or lower. The Curie point of the magnetic material 25 is preferably 300°C or lower, and more preferably 200°C or lower.

The magnetic shield 23 is a member placed around the periphery of the induction heating coil 21 so as to surround the induction heating coil 21. The magnetic shield 23 may be made of a magnetic material. In the illustrated embodiment, the magnetic shield 23 is a tubular member placed around the periphery of the induction heating coil 21. The length of the magnetic shield 23 in the axial direction of the induction heating coil 21 may be longer than the length of the induction heating coil 21 in the same direction. The magnetic shield 23 can suppress the heat generated by the induction heating coil 21.

As shown in FIG. 4, a glass or crystal body 27 containing Al and/or Si may be placed between the honeycomb structure 20 and the induction heating coil 21. The glass or crystal body 27 containing Al and/or Si may also be placed between the induction heating coil 21 and the magnetic shield 23. By placing the glass or crystal body 27 containing Al and/or Si (hereinafter simply referred to as "crystal body 27") at these positions, electrical short circuits among the honeycomb structure 20, the induction heating coil 21, and the magnetic shield 23 can be prevented, and components such as moisture contained in the gas flowing through the honeycomb structure 20 can be prevented from coming into contact with the induction heating coil 21. Although FIG. 4 illustrates the crystal body 27 as a frame having a rectangular cross section that surrounds the honeycomb structure 20 and the like, the crystal body 27 may have other shapes. For example, the crystal body 27 may be a plate-shaped body that is laminated on only one side of the honeycomb structure 20 or the like. FIG. 4 illustrated the enlarged gap between the honeycomb structure 20 and the induction heating coil 21, but it is merely for ease of understanding.

The gas adsorption/desorption unit 2 may have only one honeycomb structure 20, or it may have multiple honeycomb structures 20 as illustrated in FIG. 2. FIG. 2 shows an embodiment in which three rectangular parallelepiped honeycomb structures 20 extending long in the axial direction AD (the flow direction of the gas 11) are arranged in parallel. Two induction heating coils 21 are provided for each honeycomb structure 20, and one magnetic shield 23 is provided so as to surround all three honeycomb structures 20. The two induction heating coils 21 are disposed at the front and rear of the honeycomb structure 20 in the axial direction AD.

One of the plurality of honeycomb structures 20 arranged in parallel is called a first honeycomb structure, and the other arranged adjacent to the first honeycomb structure is called a second honeycomb structure. When the first honeycomb structure has the magnetic material 25 as described above, the second honeycomb structure may not have the magnetic material 25. This is because the heat generated in the first honeycomb structure can heat the second honeycomb structure and its gas adsorbent 26. The second honeycomb structure having no magnetic material 25 may be arranged on both sides of the first honeycomb structure having the magnetic material 25, or the first honeycomb structure having the magnetic material 25 may be arranged on both sides of the second honeycomb structure having no magnetic material 25. The configuration of the second honeycomb structure may be the same as that of the above honeycomb structure 20, with the exception that the second honeycomb structure does not have the magnetic material 25.

Furthermore, a plurality of honeycomb structures 20 may be arranged in series in the axial direction AD. One of the plurality of honeycomb structures 20 arranged in series is called an upstream honeycomb structure, and the honeycomb structure arranged on a downstream side of the upstream honeycomb structure in the flow direction of the gas 11 is called a downstream honeycomb structure. When the upstream honeycomb structure has the magnetic material 25 as described above, the downstream honeycomb structure may not have the magnetic material 25. This is because the heat generated in the upstream honeycomb structure can heat the downstream honeycomb structure and its gas adsorbent 26. The configuration of the downstream honeycomb structure may be the same as that of the above honeycomb structure 20, with the exception that the downstream honeycomb structure does not have the magnetic material 25.

The gas adsorption/desorption device 1 may further include a gas adsorption member (not shown) that contains the gas adsorbent 26 and is other than that of the honeycomb structure 20. For example, a material that can be used as a member capable of maintaining its structure, such as a compressed gas adsorbent 26, can be used as the other gas adsorbing member. The other gas adsorption members may be disposed between the honeycomb structure 20 and the induction heating coil 21 and/or between a plurality of honeycomb structures 20. The heat generated in the first honeycomb structure 20 can also heat such other gas adsorbing member and its gas adsorbent 26. The efficiency of the gas 11 recovered can be improved by providing the other gas adsorbing member.

As illustrated in FIG. 1, the housing 3 contains the gas adsorption/desorption unit 2 therein. Although not limited, the housing 3 can be a cylindrical member with front and rear ends opened. The gas adsorption/desorption unit 2 is positioned inside the housing 3 so that the end faces where the cells 241a open face the front and rear ends of the housing 3.

A fan 4 is used to feed the mixed gas 10 to the gas adsorption/desorption unit 2 in the housing 3. The fan 4 can be provided inside the housing 3, more specifically at the front end of the housing 3. The fan 4 may be provided outside of housing 3. The mixed gas 10 is discharged from the rear end of housing 3 after passing through the gas adsorption/desorption unit 2.

The damper 5 is for forming a sealed space 50 including the gas adsorption/desorption unit 2 inside the housing 3. The damper 5 may have a pair of opening/closing members 51 located on both sides of the gas adsorption/desorption unit 2. Although not limited, as shown in FIG. 1, each opening/closing member 51 may have an outer shape that fits to the internal shape of the housing 3 and may have a plurality of plates 52 that are rotatably disposed inside the housing 3. The plates 52 are rotated so that they overlap with each other or are adjacent to each other, thereby closing the flow path in the housing 3. Furthermore, the plates 52 are rotated to form a space between them, thereby opening the flow paths in the housing 3.

The water vapor feeder 6 is for feeding water vapor 60 to the sealed space 50 within the housing 3. The gas 11 adsorbed by the gas adsorption/desorption unit 2 is desorbed by the water vapor 60. Although not limited, the water vapor feeder 6 can be a boiler. The water vapor feeder 6 may have a tank 61 capable of feeding water 61a, a heater 62 for heating the water 61a in the tank 61 to generate water vapor 60, and a valve 63 provided between the tank 61 and the housing 3 for controlling the flow of water vapor 60 from the tank 61 to the housing 3.

The gas separator 7 is for separating the gas 11 from the water vapor 60. By cooling the water vapor 60 in the gas separator 7, the gas 11 can be separated from the water vapor 60. The gas separator 7 can also be called a cooling tower. The gas separator 7 may have a tank 71, a valve 72 provided between the tank 71 and the housing 3 for controlling the flow of the water vapor 60 from the housing 3 to the tank 71, and a heat exchanger 73 for cooling the water vapor 60 in the tank 71. The tank 71 stores the water 71a generated by cooling the water vapor 60 and the gas 11 separated from the water vapor 60. The tank 71 is configured to allow the water 71a collected in it to be discharged.

The vacuum pump 8 is connected to the gas separator 7 (more specifically, the tank 71). The vacuum pump 8 is for drawing out the gas 11 separated in the gas separator 7. A container (not shown) is connected to the vacuum pump 8, and the gas 11 can be collected in the container.

Next, the gas recovery method using the gas adsorption/desorption system 1 illustrated in FIG. 1 is described. The gas recovery method includes an adsorption step of adsorbing the gas 11, which is a part of components in the mixed gas 10, to the gas adsorption/desorption unit 2, and a desorption step of desorbing the gas 11 from the gas adsorption/desorption unit 2 and recovering the gas 11.

In the adsorption step, the damper 5 is opened and the mixed gas 10 is fed to the gas adsorption/desorption unit 2 by the fan 4. In this case, the gas 11 is adsorbed by the gas adsorbent 26 in the gas adsorption/desorption unit 2, and a proportion of the gas 11 is reduced or the mixed gas 10 that has removed the gas 11 is discharged from the rear end of the housing 3. In the adsorption step, the induction heating coil 21 may not be subjected to electrical conduction, the valve 63 of the water vapor feeder 6 and the valve 72 of the gas separator 7 may be closed, and the vacuum pump 8 may be stopped.

The desorption step takes place after the adsorption step. In the desorption step, the fan 4 is stopped and damper 5 is closed to form the sealed space 50. The induction heating coil 21 is subjected to electrical conduction, and the honeycomb structure 20 and the gas adsorbent 26 are heated by induction heating. Furthermore, the valve 63 of the water vapor feeder 6 is opened to introduce the water vapor 60 into the sealed space 50, and the gas 11 adsorbed by the gas adsorbent 26 is desorbed into the water vapor 60. During desorption of the gas 11, the magnetic material 25 and the honeycomb structure 20 are subjected to induction heating by the magnetic flux from the induction heating coil 21, whereby the gas adsorbent 26 is uniformly heated to a predetermined temperature, and the gas 11 is efficiently desorbed. Furthermore, the valve 72 of the gas separator 7 is opened and the vacuum pump 8 is operated, so that the gas 11 separated from the water vapor 60 in the gas separator 7 is recovered through the vacuum pump 8.

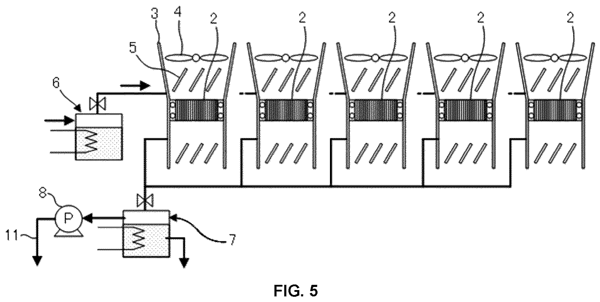

Next, FIG. 5 is an explanatory view illustrating a variation of the gas adsorption/desorption device 1 in FIG. 1. Although FIG. 1 illustrates the gas adsorption/desorption device 1 having one gas adsorption/desorption unit 2, the gas adsorption/desorption device 1 may have a plurality of gas adsorption/desorption units 2 as illustrated in FIG. 5. Although a plurality of gas adsorption/desorption units 2 may be arranged in series, a plurality of gas adsorption/desorption units 2 may be arranged in parallel to one another as shown in FIG. 5. Each gas adsorption/desorption unit 2 may be connected to its own water vapor feeder 6 and gas separator 7, but at least two gas adsorption/desorption units 2 may be connected to the same water vapor feeder 6 and gas separator 7. While the desorption step is being carried out in part of the gas adsorption/desorption units 2 among the plurality of gas adsorption/desorption units 2, the adsorption step can be carried out in the other gas adsorption/desorption units 2. By sequentially changing the gas adsorption/desorption unit 2 performing the desorption step, the gas 11 can be continuously recovered. Generally, the adsorption step takes a longer time than the desorption step. The number of gas adsorption/desorption units 2 can be determined depending on the time difference between the adsorption and desorption steps.

Next, FIG. 6 is an explanatory view illustrating a first example of a present mode of the magnetic material 25 and the gas adsorbent 26 in the honeycomb structure in FIG. 2. As described above, the magnetic material 25 may be present in at least a part of the radial direction and the axial direction AD within the honeycomb structure 20, and more specifically, may be present inside the outer peripheral wall 240, inside the partition walls 241, inside the cells 241a, and/or on the outer peripheral wall 240. Also, the magnetic material 25 present inside the cells 241a may be filled in the cells 241a or coated on the surfaces of the partition walls 241. Further, the gas adsorbent 26 may be present inside the outer peripheral wall 240, inside the partition walls 241, and/or inside the cells 241a. Also, the gas adsorbent 26 present inside the cells 241a may be filled in the cells 241a or coated on the surfaces of the partition walls 241. An example of the present mode of these magnetic material 25 and gas adsorbent 26 includes the mode shown in FIG. 6.

FIG. 6 illustrates an embodiment in which the magnetic material 25 is filled in the cells 241a and the surfaces of the partition walls 241 are coated with the gas adsorbent 26. The coating of the gas adsorbent 26 on the surfaces of the partition walls 241 allows the mixed gas 10 containing the gas 11 and the water vapor 60 (herein after referred to as the "gas 11 and the like") to more reliably contact the gas adsorbent 26, thereby improving the efficiency of adsorption and desorption of the gas 11. The magnetic flux from the induction heating coil 21 inductively heats the magnetic material 25, and the gas adsorbent 26 is heated by that heat. By filling the cells 241a with the magnetic material 25, it is possible for the cells 241a to function as a heater in the honeycomb structure 20, and it is also possible to prevent the gas adsorbent 26 and the magnetic material 25 from coming into contact with each other.

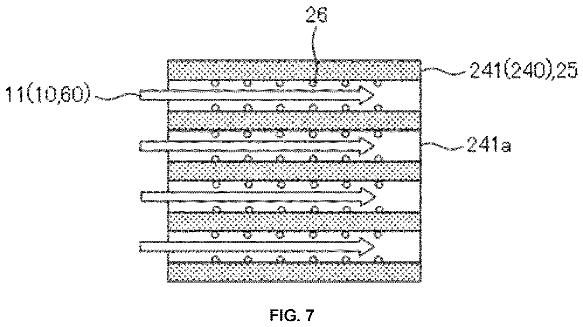

Next, FIG. 7 is an explanatory view illustrating a second example of a present mode of the magnetic material 25 and the gas adsorbent 26 in the honeycomb structure in FIG. 2. The honeycomb structure portion 24 (the outer peripheral wall 240 and the partition walls 241) is usually made of a ceramic material such as cordierite. In the embodiment illustrated in FIG. 7, the honeycomb structure 24 is produced in a state where the magnetic material 25 is mixed with the ceramic material, and the magnetic material 25 is allowed to be present inside the outer peripheral wall 240 and the partition walls 241. By adopting such an embodiment, it will be possible to allows the outer peripheral wall 240 and the partition walls 241 to function as heaters in the honeycomb structure 20.

Next, FIG. 8 is an explanatory view illustrating a third example of a present mode of the magnetic material 25 and the gas adsorbent 26 in the honeycomb structure in FIG. 2. In the embodiment illustrated in FIG. 8, the honeycomb structure portion 24 is produced in a state where the gas adsorbent 26 is mixed with a porous material such as gamma alumina, nanoporous or mesoporous silica, or the honeycomb structure portion 24 is produced using the gas adsorbent 26, thereby causing the gas adsorbent 26 to be present inside the outer peripheral wall 240 and the partition walls 241. In the embodiment illustrated in FIG. 8, the ends of the cells 241a are filled with the magnetic material 25 to form plugged portions 28. The cells 241a include first cells 241a1 plugged at the other end face, and second cells 241a2 plugged at one end face. The gas adsorption/desorption unit 2 according to this embodiment is configured so that the gas 11 and the like flowing into the first cells 241a1 from one end face passes through the partition walls 241 to reach the second cells 241a2, and then flows out from the other end face through the second cells 241a2. By adopting such an embodiment, it will be possible to allow the plugged portion 28 to function as a heater in the honeycomb structure 20, and it will be possible to utilize the entire partition wall 241 for adsorption and desorption of the gas 11.

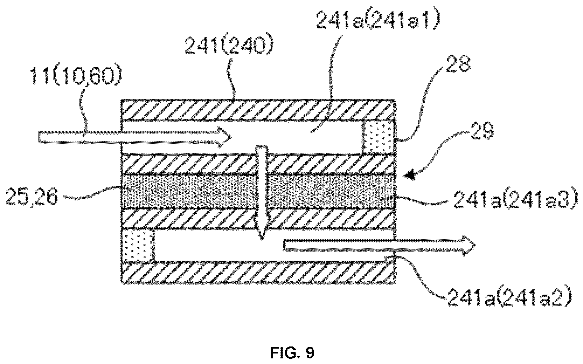

Next, FIG. 9 is an explanatory view illustrating a fourth example of a present mode of the magnetic material 25 and the gas adsorbent 26 in the honeycomb structure in FIG. 2. In the embodiment illustrated in FIG. 9, the gas adsorbent 26 is filled in some of the cells 241a. The cells 241a may further be filled with the magnetic material 25 while being mixed with the gas adsorbent 26. Further, the plugged portions 28 are formed in some of the other cells 241a. The plugged portions 28 may be formed of the magnetic material 25 as in the embodiment illustrated in FIG. 8, or may be formed of a ceramic material of the normal honeycomb structure 20.

In other words, in the embodiment illustrated in FIG. 9, the cells 241a includes first cells 241a1 plugged at the other end face, second cells 241a2 plugged at one end face, and third cells 241a3 disposed between the first cells 241a1 and the second cells 241a2 and filled with the gas adsorbent 26 (and the magnetic material 25). The gas adsorption/desorption unit 2 according to this embodiment is configured so that the gas 11 and the like flowing into the first cells 241a1 and the third cells 241a3 from one end face passes through the partition walls 241 to reach the second cells 241a2, and then flows out from the other end face through the second cells 241a2. In other words, the partition walls 241 and the third cells 241a3 are treated as apparent partition walls 29. By adopting such an embodiment, it will be possible to allow the plugged portions 28 and the cells 241a to function as heaters in the honeycomb structure 20, and it will be possible to utilize the cells 241a (the third cells 241a3) as reaction fields for the adsorption and desorption of the gas 11.

Further, the plugged portions may be provided at both ends of the cells 241a containing the magnetic material 25 and the gas adsorbent 26 to prevent the magnetic material 25 and the gas adsorbent 26 from being exposed to the gas 11 and chemicals used to coat the gas adsorbent 26. The plugged portions can be made of a material that does not react with the gas 11 or the chemicals used for the gas adsorbent 26. As a result, it is possible to further utilize advantages of improving durability by avoiding contact of the magnetic material 25 and the gas adsorbent 26 with the gas 11 and the chemicals used to coat the gas adsorbent 26, while maintaining the heating function. In addition, although the present modes of the magnetic material 25 and the gas adsorbent 26 have been described using FIG. 6 to FIG. 9, these present modes can be combined in any desired manner.

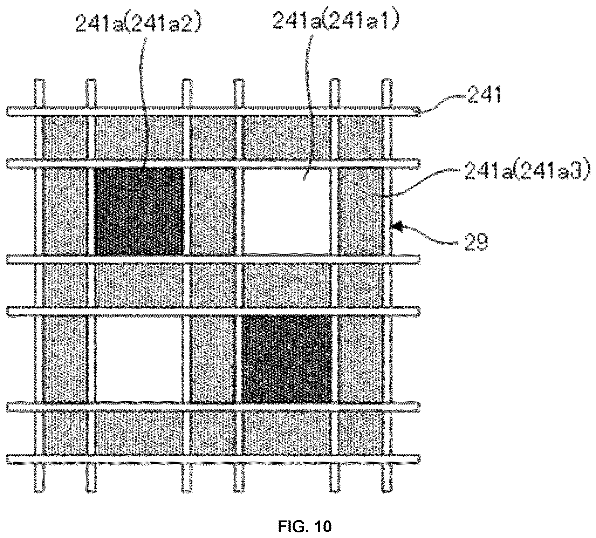

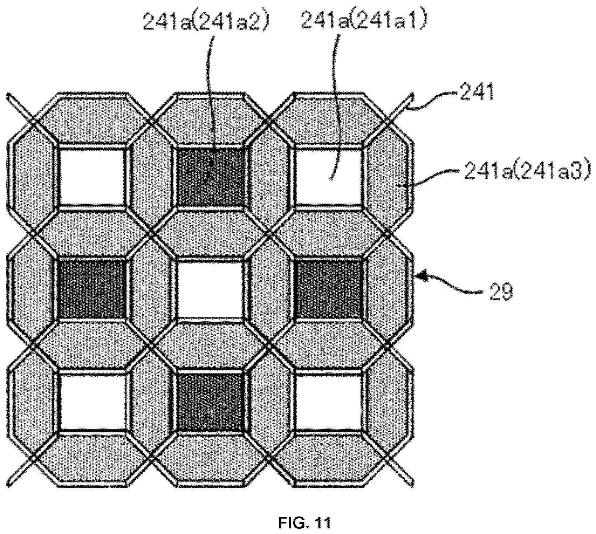

Next, FIG. 10 is a front view illustrating an example of the honeycomb structure 20 for implementing the present mode of the magnetic material 25 and the gas adsorbent 26 in FIG. 9, and FIG. 11 is a front view illustrating another example of the honeycomb structure 20 for implementing the present mode of the magnetic material 25 and the gas adsorbent 26 in FIG. 9. At the end face of the honeycomb structure portion 24 or in a cross section of the honeycomb structure portion 24 orthogonal to the extending direction of the cells 241a, the shapes of the first cells 241a1 and the second cells 241a2 and the shapes of the third cells 241a3 may be the same, but they may be different as shown in FIGS. 10 and 11.

As illustrated in FIG. 10, the third cells 241a3 may be formed to be narrower and/or smaller than the first cells 241a1 and the second cells 241a2. It is possible to form apparent rectangular partition walls 29 surrounding the rectangular first cells 241a1 and second cells 241a2. By adopting such an embodiment, the flow rate of the passing gas 11 and the like can be increased, and a balance between the gas flow rate and the gas adsorption can be maintained.

As illustrated in FIG. 11, the first cells 241a1 and the second cells 241a2 may be rectangular, while the third cells 241a3 may be elongated hexagonal shaped. The elongated hexagonal third cells 241a3 can be arranged to surround the first cells 241a1 and the second cells 241a2. By adopting such an embodiment, the flow rate of the passing gas 11 and the like can be increased, and a balance between the gas flow rate and gas adsorption can be maintained.

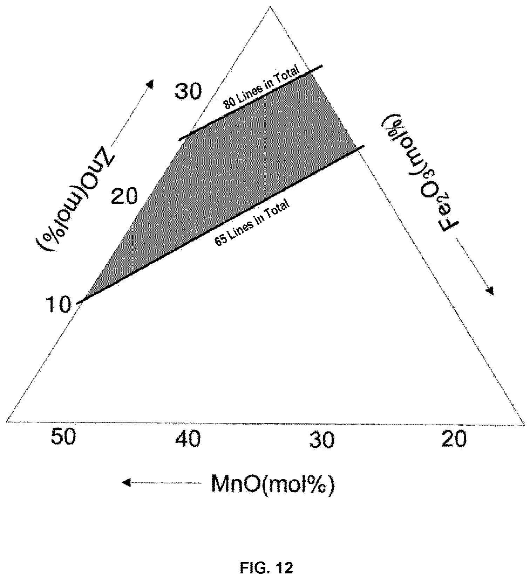

Next, the magnetic material 25 will be described in more detail. FIG. 12 is an explanatory view illustrating the relationship between a component ratio of a three-component system and a Curie point in a magnetic material containing MnO, ZnO, and Fe₂O₃. When the magnetic material 25 contains the three components: MnO, ZnO and Fe₂O₃, that is, when the magnetic material 25 is Mn-Zn ferrite, the Curie point of the magnetic material 25 varies depending on the ratio of these three components. The thicker line at the upper part of FIG. 12 represents a straight line where a value of "MnO (Mol %) + 2 x ZnO (Mol %)" is 80 mol % in the magnetic material 25 of the three-component system of MnO, ZnO, and Fe₂O₃. The thick line at the lower part of FIG. 12 represents a straight line where the value of "MnO (Mol %) + 2 x ZnO (Mol %)" is 65 mol % in the magnetic material 25 of the three-component system of MnO, ZnO, and Fe₂O₃. In the region sandwiched between these thicker lines, the Curie point of the magnetic material 25 can be set in the range of 40°C or more and 150°C or less.

In other words, when the molar concentrations of MnO and ZnO in the total of the three components MnO, ZnO and Fe₂O₃ satisfy the relational expression: 65 ≤ MnO (mol%) + 2 × ZnO (mol%) ≤ 80, the Curie point of the magnetic material 25 is in the range of 40°C or more and 150°C or less. The magnetic material 25 has a property in which the magnetic permeability is sharply decreased near the Curie point, and this property can be utilized to perform temperature control to suppress the temperatures of the magnetic material 25 and the gas adsorbent 26 to be lower than or equal to the Curie point. For example, when efficient CO₂ capture is desired, amines may be used as the gas adsorbent 26. The amines are degraded at a temperature of 150°C or higher. By setting the Curie point of the magnetic material 25 to the range of 40°C or more and 150°C or less as described above, the temperature of the gas adsorbent 26 can be uniformly and rapidly increased by induction heating, and deterioration of the amine as the gas adsorbent 26 due to excessive temperature can be avoided. That is, the magnetic material 25 having the Curie point in the above range is particularly useful when the amines are used to capture CO₂.

The above relational expression is a relational expression of the molar concentrations of MnO and ZnO when the total number of moles of the three components is 100 mol %, and for example, when MnO (mol %) + 2 × ZnO (mol %) is equal to 80 mol %, the molar concentration of Fe₂O₃ is 20 mol %. The mass ratio of the above three components in the entire magnetic material 25 is 70 mol % or more, more preferably 85 mol % or more, and even more preferably 95 mol % or more.

The magnetic material 25 preferably has an initial magnetic permeability of 1000 (H/m) or more. This is to improve the heating characteristics due to increased losses consisting of eddy current loss and hysteresis loss. When the magnetic material 25 is Mn-Zn ferrite, its initial permeability tends to be 1000 (H/m) or more. The initial permeability can be measured by preparing an annular test piece and applying a high frequency using a BH analyzer.

The magnetic material 25 preferably has an electrical resistivity of 10 Ωm or less. The electrical resistivity of 10 Ωm or less allows sufficient eddy currents to be generated when induction heating is performed, thereby reliably heating the magnetic material 25. The electrical resistivity can be measured by preparing a rod-shaped test piece and using the AC four-terminal method.

Next, a method for producing the magnetic material 25 containing the three components MnO, ZnO, and Fe₂O₃, which is used for the gas adsorption/desorption unit 2 according to this embodiment, will be described. The method for producing the magnetic material 25 according to this embodiment includes a heat treatment step of heating a magnetic element while exposing it in an atmosphere having an oxygen concentration of 2 to 12 vol %.

The magnetic element is made by mixing and molding powders of inorganic salts such as Mn, Zn, Fe oxides or carbonates. The heat treatment can be performed in the temperature range of 500 to 1200°C in the atmosphere described above.

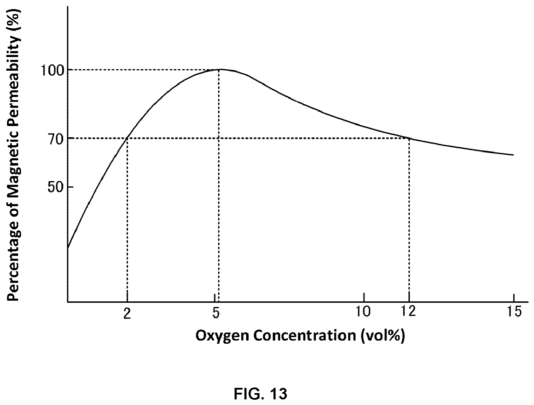

FIG. 13 is a graph illustrating a relationship between the oxygen concentration of the atmosphere to which the magnetic element is exposed in the heat treatment step and the magnetic permeability of the magnetic material 25 In FIG. 13, the vertical axis indicates a ratio to the maximum value of the magnetic permeability of the magnetic material 25 obtained after the heat treatment, and the horizontal axis indicates the oxygen concentration of the atmosphere to which the magnetic element is exposed. As illustrated in FIG. 13, the magnetic permeability of the magnetic material 25 obtained after the heat treatment varies depending on the oxygen concentration of the atmosphere to which the magnetic element is exposed during the heat treatment. The magnetic permeability of the magnetic material 25 tends to gradually increase as the oxygen concentration of the atmosphere to which the magnetic element is exposed increases from 0 vol %, reach a maximum value when the oxygen concentration is a predetermined value (just over 5 vol % in the graph shown), and then decrease gradually as the oxygen concentration increases.

As described above, the heat treatment of the magnetic element in the atmosphere having the oxygen concentration of 2 to 12 vol % can ensure a magnetic permeability of 70% or more of the maximum value. When it is not preferable to increase the oxygen partial pressure too much from the viewpoint of sintering, the magnetic element may be heated while exposing it to an atmosphere having an oxygen concentration of 2 to 8 vol %.

While the preferred embodiments of the invention have been described above in detail with reference to the drawings, the present invention is not limited to such embodiments. It is obvious that a person skilled in the art to which this invention belongs can arrive at various variations or modifications in the scope of the technical idea recited in the claims, and it is understood that they also belong to the technical scope of this invention.

### Description of Reference Numerals

1 gas adsorption/desorption device
2 gas adsorption/desorption unit
11 gas
20 honeycomb structure
21 induction heating coil
23 magnetic shield
24 honeycomb structure portion
240 outer peripheral wall
241 partition wall
241a cell
241a1 first cell
241a2 second cell
241a3 third cell
25 magnetic material
26 gas adsorbent
27 glass or crystal body
28 plugged portion

## Claims

1. A gas adsorption/desorption unit comprising:
one or more honeycomb structures including a honeycomb structure portion having an outer peripheral wall and partition walls provided on an inner side of the outer peripheral wall, the partition walls defining a plurality of cells each extending from one end face to other end face of the honeycomb structure portion to form a flow path; and
at least one induction heating coil provided around the periphery of each of the one or more honeycomb structures,
wherein at least one of the one or more honeycomb structures comprises a magnetic material and a gas adsorbent.

2. The gas adsorption/desorption unit according to claim 1, wherein the magnetic material is present in at least a part of the honeycomb structure in radial and axial directions.

3. The gas adsorption/desorption unit according to claim 2, wherein the magnetic material is present inside the outer peripheral wall, inside the partition walls, inside the cells, and/or on the outer peripheral wall.

4. The gas adsorption/desorption unit according to claim 3, wherein the magnetic material present inside the cells is filled in the cells or coated on surfaces of the partition walls.

5. The gas adsorption/desorption unit according to claim 1, further comprising a magnetic shield provided around the outer periphery of the induction heating coil.

6. The gas adsorption/desorption unit according to claim 1, wherein the honeycomb structure portion comprises at least one selected from the group consisting of cordierite, silicon carbide, silicon, silicic acid and alumina.

7. The gas adsorption/desorption unit according to claim 1, wherein a glass or crystal body containing Al and/or Si is disposed between the honeycomb structure and the induction heating coil.

8. The gas adsorption/desorption unit according to claim 5, wherein a glass or crystal body containing Al and/or Si is disposed between the induction heating coil and the magnetic shield.

9. The gas adsorption/desorption unit according to claim 1, wherein the gas adsorbent comprises at least one selected from the group consisting of nitrogen-containing compounds, porous organic cages, polystyrene, metal-organic frameworks, metal oxides, graphene, activated carbon, nitrogen doped carbon, alkali compounds, carbonates, bicarbonates, zeolite, amorphous alumina silicates, ionic liquids, or combinations thereof.

10. The gas adsorption/desorption unit according to claim 1, wherein the magnetic material comprises at least one selected from the group consisting of Fe, Cr, Ni, Mn, Zn, Co, Cu, and Si.

11. The gas adsorption/desorption unit according to claim 1, wherein the magnetic material has a Curie point of 300°C or lower.

12. The gas adsorption/desorption unit according to claim 11, wherein the magnetic material comprises three components: MnO, ZnO, and Fe₂O₃, and molar concentrations of MnO and ZnO in the total of the three components satisfy a relational expression: 65 ≤ MnO (mol%) + 2 × ZnO (mol%) ≤ 80.

13. The gas adsorption/desorption unit according to claim 1, wherein the magnetic material has an initial magnetic permeability of 1000 (H/m) or more.

14. The gas adsorption/desorption unit according to claim 1, wherein the magnetic material has an electrical resistivity of 10 Ωm or less.

15. The gas adsorption/desorption unit according to any one of claims 1 to 14, wherein the gas adsorbent is present inside the outer peripheral wall, inside the partition walls and/or inside the cells.

16. The gas adsorption/desorption unit according to claim 15, wherein the magnetic material present inside the cells is filled in the cells or coated on surfaces of the partition walls.

17. The gas adsorption/desorption unit according to claim 15,
wherein the gas adsorbent is present inside the cells,
wherein the cells comprise: first cells plugged at the other end face; second cells plugged at the one end face; and third cells provided between the first cells and the second cells and filled with the gas adsorbent, and
wherein the gas adsorption/desorption unit is configured so that the gas flowing into the first cells from the one end face passes through the partition walls and the third cells to reach the second cells, and flows out through the second cells from the other end face.

18. A gas adsorption/desorption device comprising:
the gas adsorption/desorption unit according to any one of claims 1 to 14; and
a power source circuit connected to the induction heating circuit,
wherein the gas adsorption/desorption device is configured to enable induction heating of the honeycomb structure by a magnetic flux from the induction heating coil when desorbing a gas from the gas adsorbent.

19. The gas adsorption/desorption device according to claim 18, wherein the gas adsorption/desorption device comprises a gas adsorbent, and further comprises a gas adsorption member provided between the honeycomb structure and the induction heating coil, and/or between the honeycomb structures.

20. The gas adsorption/desorption device according to claim 18, wherein a frequency of alternating current from the power source circuit to the induction heating coil is 10 to 150 kHz.

21. A method for producing a magnetic material for use in the gas adsorption/desorption unit according to any one of claims 12 to 14, the method comprising a heat treatment step of heating a magnetic element while exposing it to an atmosphere having an oxygen concentration of 2 to 12 vol %.

## Amended claims

### Amended claims under Art. 19.1 PCT

1. A gas adsorption/desorption unit comprising:
one or more honeycomb structures including a honeycomb structure portion having an outer peripheral wall and partition walls provided on an inner side of the outer peripheral wall, the partition walls defining a plurality of cells each extending from one end face to other end face of the honeycomb structure portion to form a flow path; and
at least one induction heating coil provided around the periphery of each of the one or more honeycomb structures,
wherein at least one of the one or more honeycomb structures comprises a magnetic material and a gas adsorbent, and
a glass or crystal body containing Al and/or Si is disposed between the honeycomb structure and the induction heating coil.

2. The gas adsorption/desorption unit according to claim 1, wherein the magnetic material is present in at least a part of the honeycomb structure in radial and axial directions.

3. The gas adsorption/desorption unit according to claim 2, wherein the magnetic material is present inside the outer peripheral wall, inside the partition walls, inside the cells, and/or on the outer peripheral wall.

4. The gas adsorption/desorption unit according to claim 3, wherein the magnetic material present inside the cells is filled in the cells or coated on surfaces of the partition walls.

5. The gas adsorption/desorption unit according to claim 1, further comprising a magnetic shield provided around the outer periphery of the induction heating coil.

6. The gas adsorption/desorption unit according to claim 1, wherein the honeycomb structure portion comprises at least one selected from the group consisting of cordierite, silicon carbide, silicon, silicic acid and alumina.

7. [Canceled]

8. The gas adsorption/desorption unit according to claim 5, wherein a glass or crystal body containing Al and/or Si is disposed between the induction heating coil and the magnetic shield.

9. The gas adsorption/desorption unit according to claim 1, wherein the gas adsorbent comprises at least one selected from the group consisting of nitrogen-containing compounds, porous organic cages, polystyrene, metal-organic frameworks, metal oxides, graphene, activated carbon, nitrogen doped carbon, alkali compounds, carbonates, bicarbonates, zeolite, amorphous alumina silicates, ionic liquids, or combinations thereof.

10. The gas adsorption/desorption unit according to claim 1, wherein the magnetic material comprises at least one selected from the group consisting of Fe, Cr, Ni, Mn, Zn, Co, Cu, and Si.

11. The gas adsorption/desorption unit according to claim 1, wherein the magnetic material has a Curie point of 300°C or lower.

12. The gas adsorption/desorption unit according to claim 11, wherein the magnetic material comprises three components: MnO, ZnO, and Fe₂O₃, and molar concentrations of MnO and ZnO in the total of the three components satisfy a relational expression: 65 ≤ MnO (mol%) + 2 × ZnO (mol%) ≤ 80.

13. The gas adsorption/desorption unit according to claim 1, wherein the magnetic material has an initial magnetic permeability of 1000 (H/m) or more.

14. The gas adsorption/desorption unit according to claim 1, wherein the magnetic material has an electrical resistivity of 10 Ωm or less.

15. The gas adsorption/desorption unit according to any one of claims 1 to 6 and 8 to 14, wherein the gas adsorbent is present inside the outer peripheral wall, inside the partition walls and/or inside the cells.

16. The gas adsorption/desorption unit according to claim 15, wherein the magnetic material present inside the cells is filled in the cells or coated on surfaces of the partition walls.

17. The gas adsorption/desorption unit according to claim 15,
wherein the gas adsorbent is present inside the cells,
wherein the cells comprise: first cells plugged at the other end face; second cells plugged at the one end face; and third cells provided between the first cells and the second cells and filled with the gas adsorbent, and
wherein the gas adsorption/desorption unit is configured so that the gas flowing into the first cells from the one end face passes through the partition walls and the third cells to reach the second cells, and flows out through the second cells from the other end face.

18. A gas adsorption/desorption device comprising:
the gas adsorption/desorption unit according to any one of claims 1 to 6 and 8 to 14; and
a power source circuit connected to the induction heating circuit,
wherein the gas adsorption/desorption device is configured to enable induction heating of the honeycomb structure by a magnetic flux from the induction heating coil when desorbing a gas from the gas adsorbent.

19. The gas adsorption/desorption device according to claim 18, wherein the gas adsorption/desorption device comprises a gas adsorbent, and further comprises a gas adsorption member provided between the honeycomb structure and the induction heating coil, and/or between the honeycomb structures.

20. The gas adsorption/desorption device according to claim 18, wherein a frequency of alternating current from the power source circuit to the induction heating coil is 10 to 150 kHz.

21. A method for producing a magnetic material for use in the gas adsorption/desorption unit according to any one of claims 12 to 14, the method comprising a heat treatment step of heating a magnetic element while exposing it to an atmosphere having an oxygen concentration of 2 to 12 vol %.

Statement under Art. 19.1 PCT
Claims 1, 15 and 18 were amended, and claim 7 was canceled.

The amendment matter of claim 1 "a glass or crystal body including Al and/or Si is disposed between the honeycomb structure and the induction heating coil" is based on claim 7.

In accordance with the cancel of original claim 7, the numbers of claims which amended claims 15 and 18 cite were changed.
